# EUROPEAN PATENT SPECIFICATION

(11) **EP 1 632 127 B1**
(45) Date of publication and mention of the grant of the patent: **25.06.2008**
(21) Application number: 05107944.0
(22) Date of filing: 30.08.2005
(51) Int. Cl.: A01D 57/01

(54) **Improvements in or relating to lawnmowers**
Verbesserungen an Rasenmähern
Perfectionnements aux tondeuses à gazon

(30) Priority: 03.09.2004 GB 0419589; 02.08.2005 GB 0515872
(43) Date of publication of application: 08.03.2006
(73) Proprietor: ROBERT BOSCH GMBH, 70469 Stuttgart (DE)
(72) Inventor: COUSSINS, Adrian, IP14 1EY, Stowmarket (GB); POOLE, Richard, IP14 1EY, Stowmarket (GB)
(74) Representative: Bailey, David Martin

(56) References cited:
- CH-A- 490 782
- US-A- 2 880 563
- US-A- 3 839 851
- US-A1- 2003 182 913

## Description

The present invention relates to improvements in or relating to lawnmowers. In particular it relates to improvements enabling lawnmowers cut grass on the extreme edge of the lawnmower which would otherwise be missed by the cutter blade.

It is known to try to improve the cutting capability of vegetation cutters such as lawnmowers by providing components which seek to lift blades of grass as they are led towards the cutter blades. For example, US5768865 describes a guiding arrangement for a crop harvester in which side walls are disposed for guiding crops from forward locations onto drum or cage structures, in a funnel-like arrangement, which serve to direct crops onto cutter disks. A forward facing elevated deflector shield is also provided across the width of the cutting head, which serves to flatten and further direct crops entering the forward facing cutting chamber. However, the guiding arrangement of US5768865 is limited to large industrial crop harvesters and is not applicable or adaptable for use in domestic lawnmowers.

DE19706592C2 describes a lawnmower having an array of forward facing tines that extend downwards and across the width of the mower. The tines comb any grass in their path into strands, prior to it entering the mower housing, positioned at the rear end of the tines. Gaps provided between the tines can also be blocked by a shaped insert bar, with closure elements that move vertically into the gaps, when the mower is used on short cut grass. The bar height is adjustable to suit the length of grass to be cut. However, when mowing along a fence or wall, the tines are not capable of directing grass at the extreme edge of the mower towards the cutter, due to their disposition and that of the front wheels. However, the grass at the extreme edge remains uncut.

AU-B-81692/94 describes a three-wheeled mower having a grass catching guide positioned on the left-hand edge of the mower and a deflector for cut grass on the right-hand edge. The guide is only helpful when cutting grass along a wall or fence disposed on the left-hand side of the mower. This may not always be convenient to arrange. Furthermore, as the cut grass is always ejected tangentially from the right-hand side of the mower, if conventional methods of cutting grass are employed, the user has to walk through the cut grass of the preceding strip as they cut the next adjoining strip of grass. Therefore, practical use of the mower is limited. Furthermore, the mower is described specifically in the context of the mower having a single central forward wheel. The single wheel is essential to remove any obstacle in front of the guide and deflector. The disclosures of AU-B-81692/94 are therefore generally not practical.

The present invention seeks to overcome these problems.

According to the present invention there is provided a lawnmower according to claim 1.

Further features of certain preferred embodiments of the invention are described in dependent claims 2 to 14.

The above and other aspects of the present invention will now be described in further detail, by way of example only, with reference to the accompanying drawings, in which:
Figure 1 is a perspective view of a first embodiment of a vegetation guide of a lawnmower in accordance with the present invention;
Figure 2 is a perspective view of a second embodiment of a vegetation guide of a lawnmower in accordance with the present invention;
Figure 3 is a perspective view of the embodiment of Figure 2, installed on the lawnmower;
Figure 4 is a plan view of the lawnmower of Figure 3;
Figure 5 is an underneath view of the lawnmower of Figure 3 illustrating its use along a walled boundary;
Figure 6 is an expanded part plan view of the lawnmower of Figure 5 further illustrating the grass guide in use;
Figure 7 is an expanded part perspective view of the lawnmower of Figure 5.
Figure 8 is a part perspective view of a third embodiment of a vegetation guide in accordance with the present invention; and
Figure 9 is a part underneath view of the embodiment of Figure 8;
Figure 10 is an underside view of a further embodiment of a lawnmower in accordance with the present invention; and
Figure 11 is a top perspective view of the lawnmower of Figure 10.

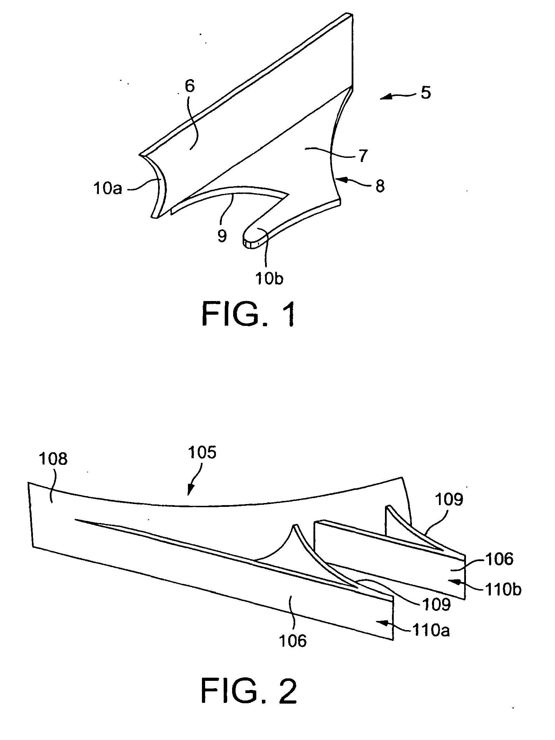

Figure 1 illustrates a first embodiment of a vegetation guide 5. The vegetation guide 5 is generally L-shaped in cross-section, including an upstanding wall 6 and a generally planar base 7 extending from a lower edge of wall 6. The vegetation guide is affixed to a lawnmower by suitable means such as adhesive, screws, bolts, clips, etc. Alternatively, and preferably, the vegetation guide is formed integrally with the lawnmower body or deck. In the embodiment shown, base 7 has a curved edge or profile 8 to match a corresponding profile on the respective portion of the lawnmower. Wall 6 defines a first or outer elongate guide element 10a. At least one further or inner elongate guide element 10b is formed by appropriate shaping of planar base 7. As shown, base 7 presents a generally arcuate leading edge 9 and has guide element in the form of a finger 10 projecting forwardly therefrom.

Figure 2 illustrates an alternative embodiment of a vegetation guide. The vegetation guide 105 includes a profiled wall 108 to match a corresponding profile on a respective portion of a lawnmower. Projecting forwardly from profiled wall 108 are outer and inner elongate guide elements in the form of fingers 110a, 110b. Each finger 110 has an outer edge defined by a substantially vertical wall 106 and a generally arcuate inner edge or wall 109.

Figures 1 and 2 illustrate a single vegetation guide 5, 105, adapted for mounting upon the right-hand side of a lawnmower (as viewed by a user pushing the mower from behind). Conveniently, a further vegetation guide 5, 105 , being a mirror image of the illustrated vegetation guides, is provided on the left-hand side of the mower.

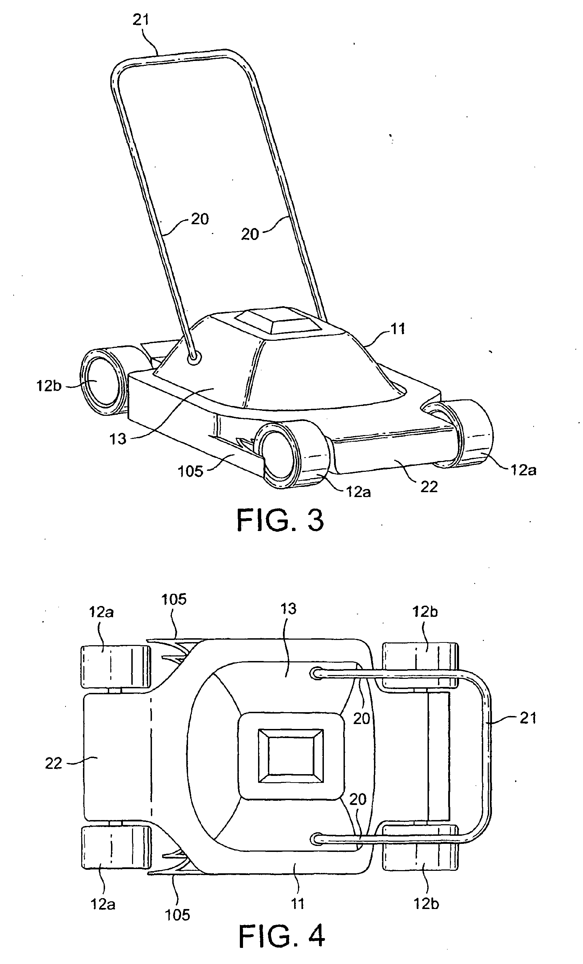

Figures 3 to 7 illustrate the embodiment of Figure 2 located on a lawnmower having a body 11 supported by a pair of front wheels 12a and a pair of rear wheels 12b, or a combination of a pair of front wheels 12a and a roller (not shown). The lawnmower illustrated is of the rotary type in which body 11 comprises a cutter bowl 14 in which is mounted a blade 15. Blade 15 is caused to rotate about a vertical axis by means of an electric motor or petrol engine within a housing 13. The lawnmower has a handle 21 defined by arms 20 attached to the sides of body 11 and joining to form a substantially inverted U-shaped handle 21 for guiding the mower.

The mower may include other features commonly found on mowers of this type, such as a chute to direct cut grass into a grass collecting means, usually at the rear of the mower, and a fan mounted in cutter bowl 14 to develop and improve the flow of air to direct grass cuttings into the grass collecting means. Different cut heights may be provided by either lowering or raising the lawnmower body in relation to the wheels. This may be provided through the individual adjustment of each wheel, lowering the blade or by other conventional means. The present invention is equally suitable for use with other types of lawnmower, such as cylinder mowers.

In accordance with the present invention, the lawnmower also includes at least one vegetation guide 105 mounted between a front wheel 12a and an outer edge of cutter bowl 14, positioned towards the leading edge 22 of the mower.

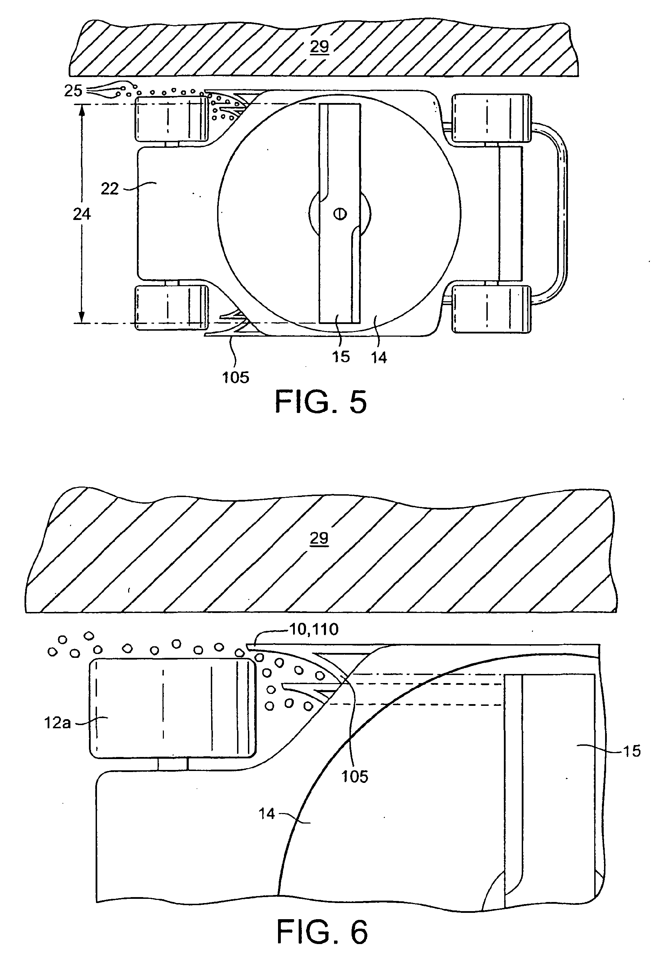

The cut-width 24 of the cutting blade is more clearly illustrated in Figure 5 by the hashed lines 23.

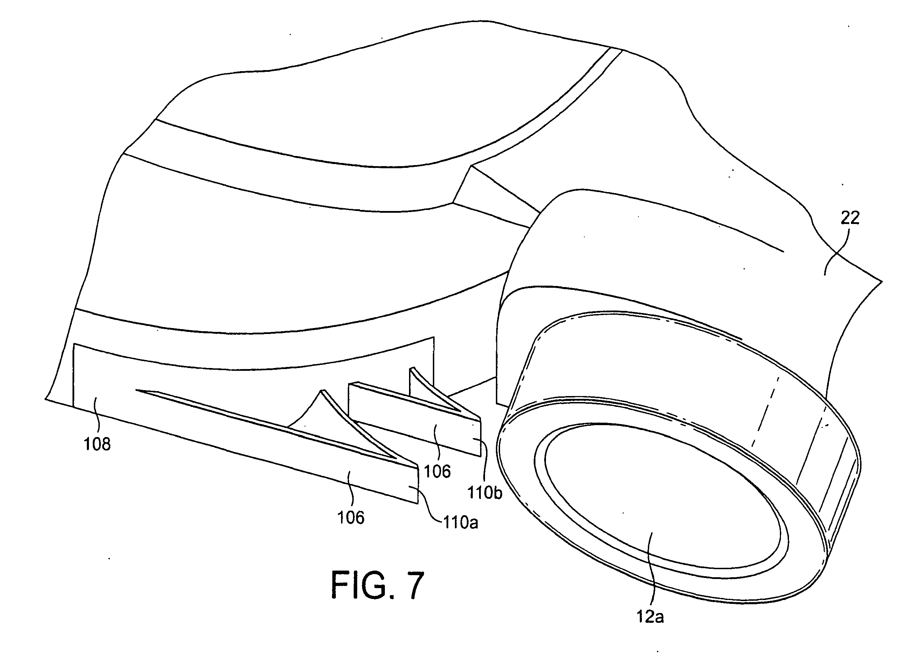

Figures 5 and 6 illustrate the present invention in use against a wall 29. The view from underneath mower shown shows elongate guide elements in the form of fingers 10, 110 of vegetation guides 105 extending beyond the width of front wheels 12a (also highlighted in Figure 7), guiding blades of grass 25, normally outside the cut-width 24 of the blade, directly into the path of mower. This is more clearly illustrated in Figure 6 where a mower fitted with vegetation guides 105 is shown in use against a walled boundary and blades of grass outside the mower width and wheel 12a are drawn towards the cutting bowl 14 and thus cutter 15. Here, the arcuate inner edge of the fmgers 110 of vegetation guide 105 guides blades of grass 25 from close to the wall and towards the cutter bowl 14 of the mower. These blades of grass would normally be outside the cut-width 24 of the cutter blade 15 and thus otherwise outside the cutting width of the mower and would thus remain inaccessible as the outer edge of the mower must always prevent the blade itself from reaching up to the walls. In a conventional mower, this dimension from the cutter blade tip to the outer edge of the mower casing can be as much as 30mm, so leaving a strip of grass this wide against any wall or other adjacent surface.

The elongate guide elements may extend towards the wheel 12a to the same extent or the inner elongate guide element 110b may be shorter or longer than the outer elongate guide element 110a. In alternative arrangements, a plurality of elongate guide elements 10,110 may be provided to enhance the channelling effect.

The vegetation guides 105 of the present invention are preferably positioned such that the elongate guide elements are at or below the lower edge of the cutter bowl housing 14. This helps to minimise the risk of channelling overhanging foliage or flowers towards the cutter bowl.

The vegetation guides 5,105 may be fixed to the outer surface of cutter bowl 14 by screws, clips, bolts or other removable means. The vegetation guides may also clip or slide onto or into fixtures on the housing of the mower. Alternatively, the vegetation guides may be permanently attached by adhesive or riveting methods at manufacture.

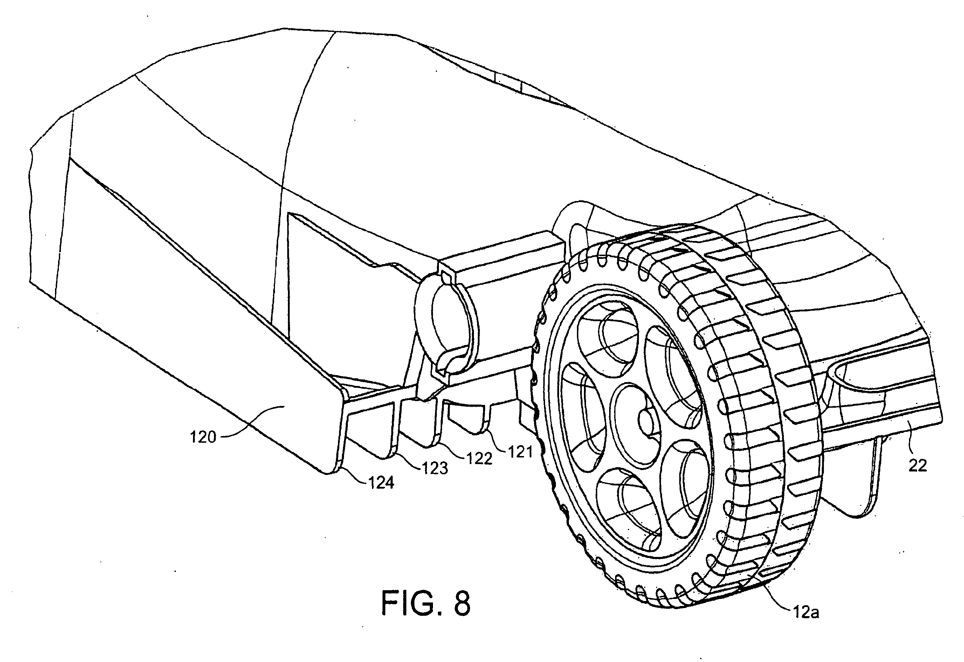

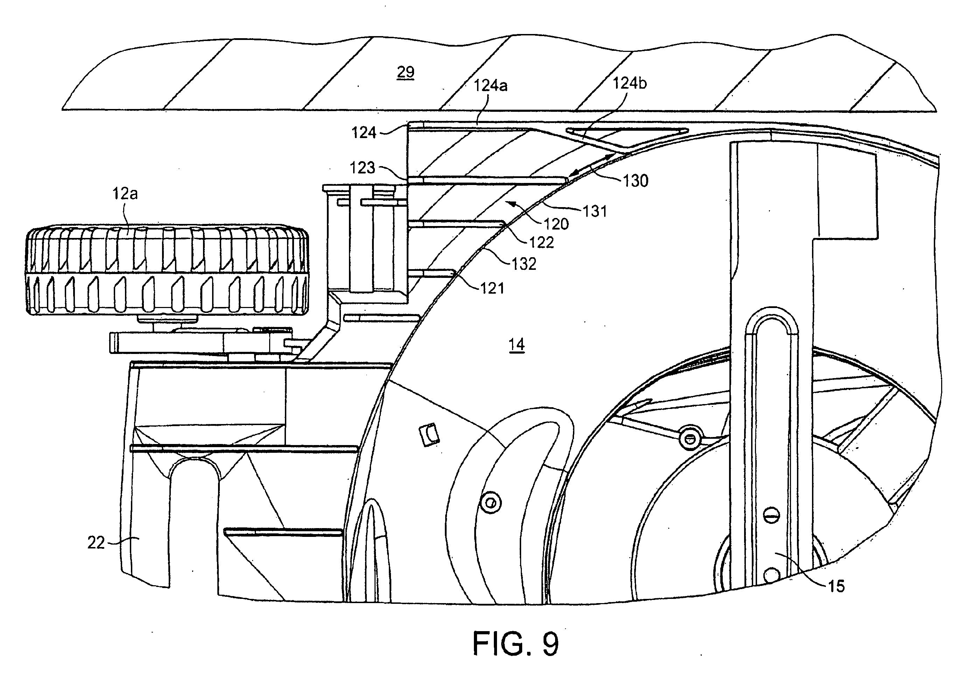

The vegetation guides can be formed from metal or plastics materials and, in the latter case, may be integrally formed with the mower housing; or provided as an additional component for retro-fitting to an existing mower. This former aspect is illustrated in the embodiment of Figures 8 and 9 in which the vegetation guides are formed integrally with the lawnmower housing or deck. In this embodiment, it will be apparent that the vegetation guides (there is one on each side of the mower) extend outwardly left and right beyond the front wheels 12a of the mower. Put another way, the front wheels are mounted substantially in-board of the vegetation guides This allows free access to the vegetation guides for the grass. Each vegetation guide 120 comprises four substantially parallel guide elements 121, 122, 123, 124. Outermost elongate guide element 124 includes a first wall portion 124a parallel to the direction of travel of the lawnmower and a second wall portion 124b directed toward the cutter bowl 14. In this embodiment, the guides are integrally formed with and suspended from a substantially horizontal extension 120 from the first outer segments of the cutter blade bowl 14. With this construction, the vertical boundary wall of the bowl 14 can locally be removed without affecting mower safety (regions 130, 131, 132 etc) giving uninterrupted access for grass entrained in the grass guides.

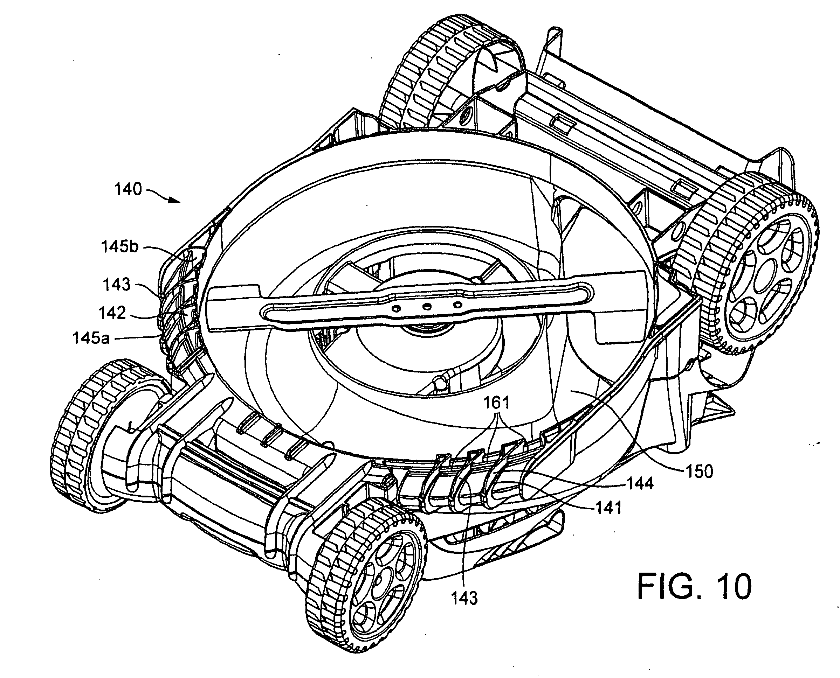

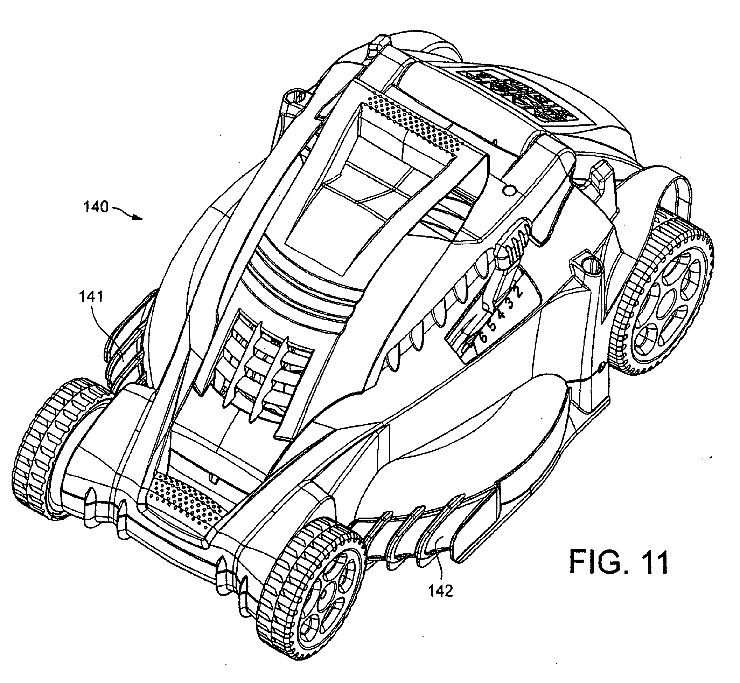

A preferred embodiment of a lawnmower incorporating a pair of vegetation guides is shown in Figures 10 and 11. In this embodiment, left and right vegetation guides 141,142 are formed integrally with the bowl of a lawnmower 140. Each vegetation guide 141, 142 includes a plurality of guide fingers 143 having a substantially straight outer (with respect to the external surface of the lawnmower) edge 144 and an inner edge 145 which is generally straight 145a at its forward end before curving 145b inwardly towards the bowl 150. In the embodiment shown, there are four fingers, including the outermost in which the outer edge 144 forms an external surface of the lawnmower, one each side of the lawnmower. The front edge of the vegetation guides follows the curve of the mower deck such that the outermost is both substantially outboard and behind the front wheel to enable more efficient capture of individual grass elements.

Two to six fingers on each side has been found to be sufficient in most cases, with the lower number applicable to small bowl sizes and the larger number to larger bowl, and thus larger cutting blade, lawnmowers.

As can be seen in Figure 11, the projection of finger 143 from the lower surfaces of the deck is continued to the upper surface. This is largely for aesthetic reasons. However, those parts of the vegetation guides projecting forwardly, both above and below the horizontal extension 120 of the bowl, do serve to prevent blades of grass sliding outwards along the lead edge of the mower.

In the embodiment shown, the vegetation guides include an internal cross-wall, or cross-wall elements 161 extending downwardly from the deck, but not so far as to extend to the lower edge of the projections. Cross-wall elements are provided where standards require the bowl to extend below the level of the cutting blade 162 and act to provide a barrier to the egress of debris such as stones thrown up by the blade.

## Claims

1. A lawnmower having a body (11) or deck movable across a lawn surface and housing a cutter element (15) within a cutter bowl (14), the cutting element (15) defining a lawnmower cutting width (24), wherein the lawnmower further comprises a vegetation guide (5,105), adapted to direct vegetation towards the cutting element (15) and provided on at least one outside side-edge of the lawnmower body adjacent the cutter chamber, **characterised in that** the vegetation guide (5,105) comprises a plurality of generally elongate guide elements (10,110), at least the outermost of which (110a) extends outwardly beyond the lawnmower cutting width (24).

2. A lawnmower as claimed in Claim 1 wherein at least one of the plurality of elongate guide elements (10,110) include an inner profile adapted to divert vegetation from a path which is parallel to the direction of travel of the lawnmower to a path which is directed inwardly towards the cutter chamber.

3. A lawnmower as claimed in Claim 2 wherein the inner profile is curved.

4. A lawnmower as claimed in Claim 1 wherein each of the plurality of elongate guide elements (10,110) are in the form of forwardly projecting fingers.

5. A lawnmower as claimed in Claim 4, wherein each of the forwardly projecting fingers has a curved inner profile.

6. A lawnmower as claimed in any one of claims 2 to 5 wherein the plurality of elongate guide elements (10,110) are laterally spaced and the spaces between adjacent guide elements are curved.

7. A lawnmower as claimed in any preceding claim wherein the vegetation guide (5,105) extends downwardly from a substantially horizontal surface.

8. A lawnmower as claimed in Claim 7 wherein the horizontal surface is formed as an extension to the cutter bowl (14).

9. A lawnmower as claimed in Claim 1 or Claim 2 wherein the plurality of elongate guide elements (10,110) are generally parallel and wherein an outermost guide element (110a) defines a wall adapted to divert vegetation by comprising a first wall portion (106) parallel to the direction of travel of the lawnmower and a second wall portion (109) angled towards the cutter bowl (14).

10. A lawnmower as claimed in any preceding claim further comprising a pair of leading wheels (12a) mounted at a front end thereof and wherein the vegetation guide (5,105) is positioned behind the leading wheels (12a).

11. A lawnmower as claimed in Claim 10 wherein the vegetation guide (5,105) has a lower edge which is lower than a lower edge of the cutter bowl (14).

12. A lawnmower as claimed in Claim 10 or Claim 11 in which an outer edge of the vegetation guide (5,105) extends substantially beyond an outer edge of the adjacent wheel (12a).

13. A lawnmower as claimed in any preceding claim wherein the vegetation guide (5,105) is formed integrally with the deck.

14. A lawnmower as claimed in any preceding claim wherein the vegetation guide (5,105) extends downwardly from a substantially horizontal wall.

## Patentansprüche

1. Rasenmäher mit einem Körper (11) oder einer Plattform, die über einen Rasen bewegt werden kann und ein Schneidelement (15) in einer Schneidhülle (14) beherbergt, wobei das Schneidelement (15) eine Schnittbreite (24) des Rasenmähers definiert, wobei der Rasenmäher weiter eine Pflanzenführung (5, 105) umfasst, die angepasst ist, Pflanzen zum Schneidelement (15) hin zu führen und die an mindestens einem äußeren Rand des Rasenmäherkörpers nahe der Schneidkammer bereitgestellt wird, **dadurch gekennzeichnet, dass** die Pflanzenführung (5, 105) eine Vielzahl allgemein länglicher Führungselemente (10, 110) umfasst, wovon sich mindestens das äußerste (110a) über die Schnittbreite (24) des Rasenmähers hinaus erstreckt.

2. Rasenmäher nach Anspruch 1, **dadurch gekennzeichnet, dass** mindestens eines der Vielzahl der länglichen Führungselemente (10, 110) ein inneres Profil aufweist, das angepasst ist, Pflanzen von einem parallel zur Fahrtrichtung des Rasenmähers laufenden Weg auf einen nach innen zur Schneidkammer gerichteten Weg umzulenken.

3. Rasenmäher nach Anspruch 2, **dadurch gekennzeichnet, dass** das Innenprofil gekrümmt ist.

4. Rasenmäher nach Anspruch 1, **dadurch gekennzeichnet, dass** jedes der Vielzahl der länglichen Führungselemente (10, 110) die Form eines nach vorn vorstehenden Fingers aufweist.

5. Rasenmäher nach Anspruch 4, **dadurch gekennzeichnet, dass** jeder der nach vorn vorstehenden Finger ein gekrümmtes Innenprofil aufweist.

6. Rasenmäher nach einem der vorhergehenden Ansprüche 2 bis 5, **dadurch gekennzeichnet, dass** die Vielzahl der länglichen Führungselemente (10, 110) seitlich beabstandet sind und die Zwischenräume zwischen aneinander angrenzenden Führungselementen gekrümmt sind.

7. Rasenmäher nach einem der vorhergehenden Ansprüche, **dadurch gekennzeichnet, dass** sich die Pflanzenführung (5, 105) von einer im Wesentlichen horizontalen Oberfläche nach unten erstreckt.

8. Rasenmäher nach Anspruch 7, **dadurch gekennzeichnet, dass** die horizontale Oberfläche als eine Erweiterung der Schneidhülle (14) gebildet ist.

9. Rasenmäher nach Anspruch 1 oder 2, **dadurch gekennzeichnet, dass** die Vielzahl der länglichen Führungselemente (10, 110) allgemein parallel liegen und **dadurch gekennzeichnet, dass** ein äußerstes Führungselement (110a) eine Wand definiert, die angepasst ist, Pflanzen **dadurch**, dass sie einen ersten parallel zur Fahrtrichtung des Rasenmähers laufenden Wandabschnitt (106) und einen zweiten im Winkel zur Schneidhülle (14) liegenden Wandabschnitt (109) umfasst, umzulenken.

10. Rasenmäher nach einem der vorhergehenden Ansprüche, **dadurch gekennzeichnet, dass** dieser weiterhin ein Paar an seinem vorderen Ende angebrachte Leiträder (12a) umfasst und, dass die Pflanzenführung (5, 105) hinter den Leiträdern (12a) angeordnet ist.

11. Rasenmäher nach Anspruch 10, **dadurch gekennzeichnet, dass** die Pflanzenführung (5, 105) eine untere Kante aufweist, die niedriger als die untere Kante der Schneidhülle (14) liegt.

12. Rasenmäher nach Anspruch 10 oder 11, bei dem sich eine Außenkante der Pflanzenführung (5, 105) im Wesentlichen über eine Außenkante des angrenzenden Rades (12a) hinaus erstreckt.

13. Rasenmäher nach einem der vorhergehenden Ansprüche, **dadurch gekennzeichnet, dass** die Pflanzenführung (5, 105) einteilig mit der Plattform gebildet ist.

14. Rasenmäher nach einem der vorhergehenden Ansprüche, **dadurch gekennzeichnet, dass** sich die Pflanzenführung (5, 105) von einer im Wesentlichen horizontalen Wand nach unten erstreckt.

## Revendications

1. Tondeuse à gazon comprenant un corps (11) ou un plateau mobile le long d'une surface à tondre et abritant un élément de coupe (15) à l'intérieur d'une coupole de coupe (14), l'élément de coupe (15) définissant une largeur de coupe (24) pour la tondeuse, et ladite tondeuse comprenant en outre un guide de végétation (5, 105) adapté à diriger la végétation vers l'élément de coupe (15) et prévu sur au moins un bord latéral extérieur du corps de tondeuse adjacent à la chambre de coupe, **caractérisé en ce que** le guide de végétation (5, 105) comprend une pluralité d'éléments guides généralement allongés (10, 110), dont au moins l'élément le plus extérieur (110a) s'étend vers l'extérieur au-delà de la largeur de coupe (24) de la tondeuse.

2. Tondeuse à gazon selon la revendication 1, dans laquelle l'un au moins de la pluralité d'éléments guides allongés (10, 110) inclut un profilé intérieur adapté à dévier la végétation depuis un trajet parallèle à la direction de déplacement de la tondeuse à gazon vers un trajet qui est dirigé vers l'intérieur en direction de la chambre de coupe.

3. Tondeuse à gazon selon la revendication 2, dans laquelle le profilé intérieur est incurvé.

4. Tondeuse à gazon selon la revendication 1, dans laquelle chacun de la pluralité d'éléments guides allongés (10, 110) a la forme d'un doigt en projection vers l'avant.

5. Tondeuse à gazon selon la revendication 4, dans lequel chacun des doigts en projection vers l'avant possède un profil intérieur incurvé.

6. Tondeuse à gazon selon l'une quelconque que des revendications 2 à 5, dans lequel la pluralité d'éléments guides allongés (10, 110) sont latéralement espacés et les espaces entre éléments guident adjacents sont incurvés.

7. Tondeuse à gazon selon l'une quelconque des revendications précédentes, dans laquelle le guide de végétation (5, 105) s'étend vers le bas depuis une surface sensiblement horizontale.

8. Tondeuse à gazon selon la revendication 7, dans laquelle la surface horizontale est formée comme une extension de la coupole de coupe (14).

9. Tondeuse à gazon selon la revendication 1 ou 2, dans laquelle la pluralité d'éléments guides allongés (10, 110) sont généralement parallèles, et un élément guide tout à fait extérieur (110a) définit une paroi adaptée à dévier la végétation du fait qu'elle comprend une première portion de paroi (106) parallèle à la direction de déplacement de la tondeuse et une seconde portion de paroi (109) en angle vers la coupole de coupe (14).

10. Tondeuse à gazon selon l'une quelconque des revendications précédentes, comprenant en outre une paire de roues avant (12a) montées à son extrémité avant, et dans laquelle le guide de végétation (5, 105) est positionné derrière les roues avant (12a).

11. Tondeuse à gazon selon la revendication 10, dans laquelle le guide de végétation (5, 105) possède une bordure inférieure qui est plus basse qu'une bordure inférieure de la coupole de coupe (14).

12. Tondeuse à gazon selon la revendication 10 ou 11, dans laquelle une bordure extérieure du guide de végétation (5, 105) s'étend sensiblement au-delà d'une bordure extérieure de la roue adjacente (12a).

13. Tondeuse à gazon selon l'une quelconque des revendications précédentes, dans laquelle le guide de végétation (5, 105) est formé de manière intégrale avec le plateau.

14. Tondeuse à gazon selon l'une quelconque des revendications précédentes, dans laquelle le guide de végétation (5, 105) s'étend vers le bas depuis une paroi sensiblement horizontale.
